# FASCICULE DE BREVET EUROPEEN

(11) **EP 3 830 401 B1**
(45) Date de publication et mention de la délivrance du brevet: **07.09.2022**
(21) Numéro de dépôt: 19765528.5
(22) Date de dépôt: 30.07.2019
(51) Int. Cl.: F02C 7/14, F28F 3/12, F28D 9/00

(54) **ÉCHANGEUR THERMIQUE POUR TURBOMACHINE**
WÄRMETAUSCHER FÜR EINE TURBOMASCHINE
HEAT EXCHANGER FOR TURBOMACHINE

(30) Priorité: 31.07.2018 FR 1857153
(43) Date de publication de la demande: 09.06.2021
(73) Titulaire: SAFRAN AIRCRAFT ENGINES, 75015 Paris (FR)
(72) Inventeur: BLUM, Hervé, Eugène, 77550 MOISSY-CRAMAYEL (FR); GUILLOU, Lancelot, 77550 MOISSY-CRAMAYEL (FR)
(74) Mandataire: Ernest Gutmann - Yves Plasseraud S.A.S.
(86) Numéro de dépôt international: PCT/FR2019/051870
(87) Numéro de publication internationale: WO 2020/025894

(56) Documents cités:
- FR-A1- 3 060 057
- US-A1- 2015 135 726
- US-A1- 2016 348 548

## Description

### DOMAINE

La présente invention concerne un échangeur thermique et plus particulièrement le refroidissement de l'huile dans un moteur d'avion.

### CONTEXTE

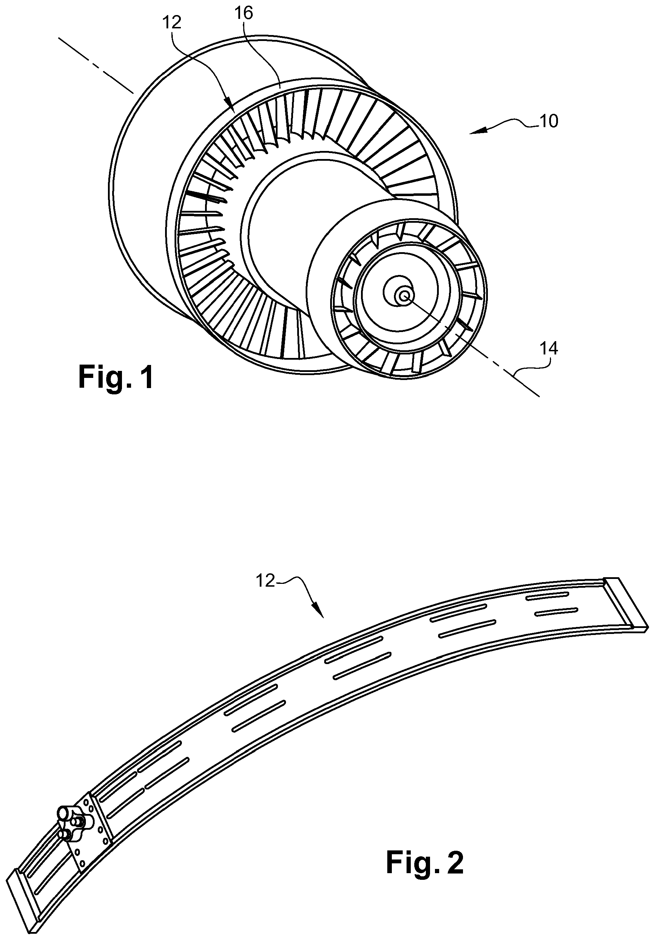

La figure 1 représente une turbomachine 10 à double flux qui comprend des pièces mobiles qui frottent contre d'autres pièces mobiles ou contre des pièces fixes, cette liaison est par exemple un palier. Pour ne pas se rompre à cause de réchauffement dû aux frottements, les pièces sont arrosées d'huile qui permet d'une part de limiter (ou contenir) leur échauffement et, d'autre part, de les lubrifier pour faciliter le glissement des pièces les unes sur les autres.

L'huile circule dans un circuit pourvu d'échangeurs thermiques, notamment des échangeurs huile/air 12, comme représenté en figure 2, ayant une matrice, sous la forme d'une conduite sinueuse conformée de manière à réaliser un échange de chaleur, dans laquelle l'huile provenant desdites pièces est introduite puis refroidie avant d'être de nouveau injectée sur lesdites pièces. L'échangeur thermique 12 représenté en figure 2 est un échangeur thermique 12 annulaire qui est monté sur la face radialement interne ou externe (par rapport à l'axe longitudinal 14 de la turbomachine) d'une virole annulaire 16 délimitant radialement vers l'extérieur ou l'intérieur une veine annulaire d'écoulement d'un flux d'air secondaire.

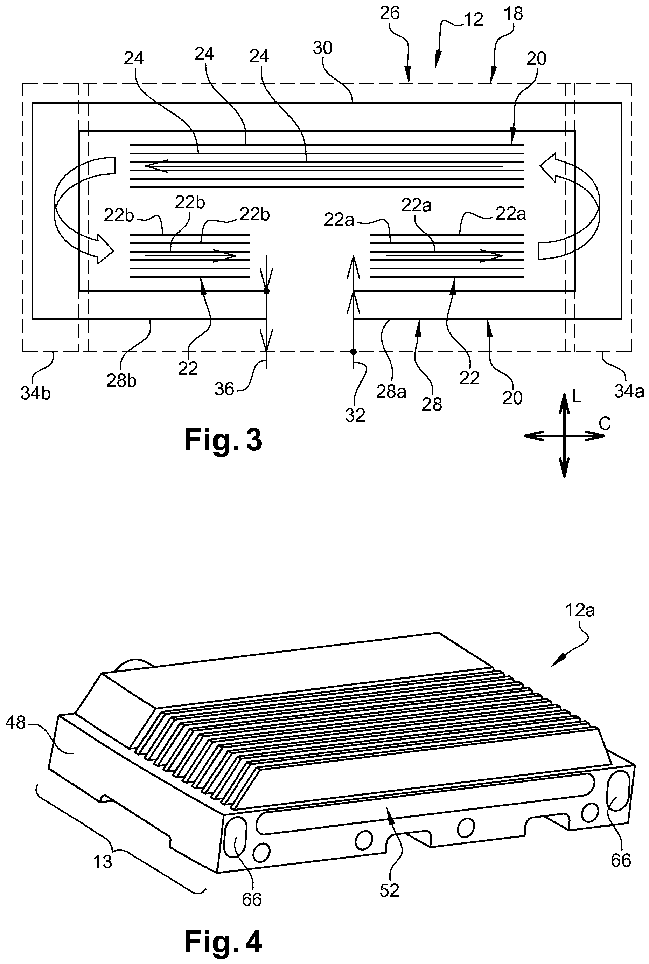

La figure 3 représente de manière schématique le principe de circulation d'un fluide à refroidir, en particulier de l'huile, dans l'échangeur de chaleur 12 comme représenté en figure 2. L'échangeur de chaleur 12 comprend une partie annulaire 18 comportant un premier circuit 20 formé de premier conduits 22 et de seconds conduits 24 pour la circulation d'huile à refroidir et un second circuit 26 formé d'un premier conduit 28 et d'un second conduit 30 pour la circulation d'huile de décongélation des premiers 22 et seconds 24 conduits du premier circuit 20. L'échangeur 12 est un échangeur annulaire qui s'étend autour de l'axe 14 de la turbomachine. Sur la figure 3 sont représentées la dimension longitudinale de l'échangeur 12 selon la direction L et la dimension circonférentielle de l'échangeur 12 selon la direction C.

Comme cela est visible, les premiers conduits 22 du premier circuit 20 comprennent des premières portions 22a qui s'étendent entre une entrée 32 de fluide et un premier organe 34a de liaison fluidique et des secondes portions 22b qui s'étendent entre un second organe 34b de liaison fluidique et une sortie 36 de fluide. Les seconds conduits 24 du premier circuit 20 s'étendent entre le premier organe 34a de liaison fluidique et le second organe 34b de liaison fluidique. De cette manière, l'huile s'écoule depuis l'entrée 32 de fluide, dans les premières portions 22a des premiers conduits 22, dans le premier organe 34a de liaison fluidique, dans les seconds conduits 24 du premier circuit 20, dans le second organe 34b de liaison fluidique, dans les secondes portions 22b des premiers conduits 22 puis vers la sortie 36 d'huile.

Le premier conduit 28 du second circuit 26 comprend une première portion 28a qui s'étend entre l'entrée 32 de fluide et le premier organe 34a de liaison fluidique et une seconde portion 28b qui s'étend entre le second organe 34b de liaison fluidique et la sortie 36 de fluide.

Le second conduit 30 du second circuit 26 s'étend entre le premier organe 34a de liaison fluidique et le second organe 34b de liaison fluidique. De cette manière, l'huile s'écoulent depuis l'entrée 32 de fluide, dans la première portion 28a du premier conduit 28, dans le premier organe 34a de liaison fluidique, dans le second conduit 30, dans le second organe 34b de liaison fluidique, dans la seconde portion 28b du premier conduit 28 du second circuit 26 puis vers la sortie d'huile 36. Ainsi conformé, l'huile du second circuit 26 peut permettre une décongélation du premier circuit 20 lorsque cela s'avère nécessaire.

Comme cela est visible, les organes 34a, 34b de liaison ainsi utilisés pour réaliser la liaison fluidique entre les premiers conduits 22, 28 et les seconds conduits 24, 30 du premier circuit 20 et du second circuit 26. Toutefois, ces pièces sont compliquées à réaliser puisqu'elles doivent comprendre des canaux de recirculation d'huile. De plus, du fait de l'indépendance structurelle de ces organes 34a, 34b de liaison, il est nécessaire de les fixer par soudure ou brasure à la partie annulaire, ce qui impose une vigilance particulière puisqu'il est impératif qu'aucune soudure ou brasure ne vienne obturer, même partiellement, l'écoulement d'huile dans le premier circuit 20 ou le second circuit 26. Il est dès lors nécessaire de mettre en place des opérations de contrôle qualité qui sont longues et couteuses. Par ailleurs, la fixation de ces organes 34a, 34b de liaison les rend non démontables, ce qui n'est pas pratique lorsque l'on souhaite pouvoir inspecter simplement le premier circuit 20 et le second circuit 26. Enfin, étant donné l'emplacement de l'échangeur thermique 12 de la veine annulaire d'écoulement d'air, il est essentiel que sa dimension radiale soit limitée afin de ne pas avoir à modifier le diamètre de la virole, ce qui impacterait nécessairement les autres pièces qui y sont fixées.

L'invention proposée a notamment pour but d'apporter une solution simple et efficace aux problèmes précités de la technique antérieure.

Un échangeur thermique pour turbomachine selon l'art antérieur est connu du document FR 3 060 057 A1.

### RESUME DE L'INVENTION

Il est tout d'abord proposé un échangeur thermique annulaire d'axe longitudinal pour turbomachine, destiné par exemple à être supporté par une virole annulaire d'un carter de la turbomachine, comprenant une partie annulaire monobloc comprenant un premier circuit fluidique comportant au moins un premier conduit et au moins un second conduit s'étendant annulairement et un second circuit fluidique comportant au moins un premier conduit et au moins un second conduit s'étendant annulairement et agencés dans une direction perpendiculaire à la direction longitudinale de part et d'autre des premiers conduit et second conduits du premier circuit, caractérisé en ce que les premier et second conduits du premier circuit ainsi que les premier et second conduits du second circuit débouchent à une première extrémité de ladite partie annulaire dans une cavité débouchant elle-même en direction circonférentielle et dans laquelle est inséré un premier organe d'étanchéité conformé de manière à :
- délimiter avec la partie annulaire au moins un premier canal de liaison fluidique du premier conduit du premier circuit avec le second conduit du premier circuit, et
- délimiter avec la partie annulaire au moins un second canal de liaison fluidique du premier conduit du second circuit avec le second conduit du second circuit, le second canal de liaison étant fluidiquement indépendant du premier canal de liaison.

Selon l'invention, la liaison fluidique au niveau d'une extrémité de l'échangeur est réalisée directement à l'intérieur de la partie annulaire puisque le premier circuit et le second circuit sont formés dans celui-ci. Au contraire de la technique antérieure, il n'est pas nécessaire de requérir à des parties de liaisons soudées ou brasées. Par ailleurs, la conformation du premier organe d'étanchéité de manière à permettre la continuité fluidique au sein du premier circuit et du second circuit permet de simplifier l'opération d'assemblage, un seul organe étant nécessaire à cet endroit. Cet assemblage s'avère également très compacte.

Selon une autre caractéristique, le premier organe d'étanchéité comprend des gorges externes dans lesquelles sont engagés des joints d'étanchéité.

Par ailleurs, le premier organe d'étanchéité peut comprendre une paroi s'étendant dans ladite direction perpendiculaire à la direction longitudinale et délimitant avec la partie annulaire deux seconds canaux de liaisons sensiblement parallèles.

En outre, l'un des deux seconds canaux peut être agencé radialement à l'extérieur de l'autre des deux seconds canaux et les deux seconds canaux sont séparés fluidiquement l'un de l'autre par une paroi du premier organe d'étanchéité.

Egalement, le premier organe peut être bloqué en position dans la cavité par une plaque appliquée au niveau de l'extrémité circonférentielle de ladite partie annulaire. Cette plaque peut être rendue solidaire de la partie annulaire, par vissage par exemple.

Enfin, les premier et second conduits du second circuit peuvent être obturés par des seconds organes à leurs extrémités débouchant circonférentiellement au niveau de la première extrémité de la partie annulaire. Ces seconds organes peuvent être maintenus en position par la plaque précitée.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une vue schématique en perspective d'une turbomachine selon la technique connue ;
- la figure 2 est une vue schématique en perspective d'une partie d'un échangeur thermique annulaire montée dans la turbomachine de la figure 1 ;
- la figure 3 est une illustration schématique de l'échangeur de la figure 2 et de l'écoulement d'huile à l'intérieur de celui-ci ;
- la figure 4 est une vue schématique en perspective d'une première extrémité d'un échangeur de chaleur selon l'invention :
- les figures 5A et 5B sont des vues schématiques en perspective d'organes d'étanchéité montés sur ladite extrémité de l'échangeur de chaleur ;
- la figure 6 est une vue schématique en perspective de la première extrémité de l'échangeur avec un plaque d'étanchéité montée sur ladite extrémité ;
- la figure 7 est une vue schématique de la première extrémité de l'échangeur de chaleur selon l'invention selon un plan de coupe perpendiculaire à l'axe longitudinal comme illustré par les flèches A en médaillon ;
- la figure 8 est une vue schématique en coupe de ladite première extrémité de l'échangeur thermique, la circulation d'huile étant illustrée.

### DESCRIPTION DETAILLEE

On se réfère maintenant aux figures 4 à 8 qui représentent un échangeur de chaleur selon l'invention. De manière similaire à ce qui a été décrit en référence à la figure 3, l'échangeur 12a selon l'invention comprend également un premier circuit 37 fluidique d'huile comportant une pluralité de premiers conduits 38 et de seconds 40 conduits sensiblement parallèles les uns aux autres, les premiers conduits 38 comprenant des premières portions 38a et secondes portions. L'échangeur 12a comprend également un second circuit fluidique 42 de décongélation comportant un premier conduit 44 et un second conduit 46 parallèles, le premier conduit 44 comportant une première portion 44a et une seconde portion.

Les premiers conduits 38, 44 et seconds 40, 42 conduits des premier 37 et second 42 circuits sont tout à fait similaires à ce qui a été décrit précédemment en référence à la figure 3 et diffèrent de ceux-ci uniquement par leur liaison fluidique les uns aux autres au niveau des extrémités circonférentielles de l'échangeur thermique. Egalement, ce qui sera décrit en référence à la première extrémité 13 circonférentielle de l'échangeur thermique 12a est également valable pour la seconde extrémité circonférentielle opposée. Ainsi, la description ne sera effectuée et représentée qu'en relation avec la première extrémité 13 circonférentielle de l'échangeur 12a à l'aide de la seconde portion du premier conduit 38 du premier circuit 37 et du second conduit 40 du premier circuit 37 ainsi qu'à l'aide de la seconde portion du premier conduit 38 et du second conduit 46 du second circuit 42.

L'invention propose donc de réaliser une liaison fluidique des premiers conduits 38 et seconds conduits 40 du premier circuit 37 ainsi que la liaison fluidique du premier conduit 44 et du second conduit 46 du second circuit 42 sans avoir à utiliser un organe de liaison structurellement indépendant de la partie annulaire 48 de l'échangeur de chaleur.

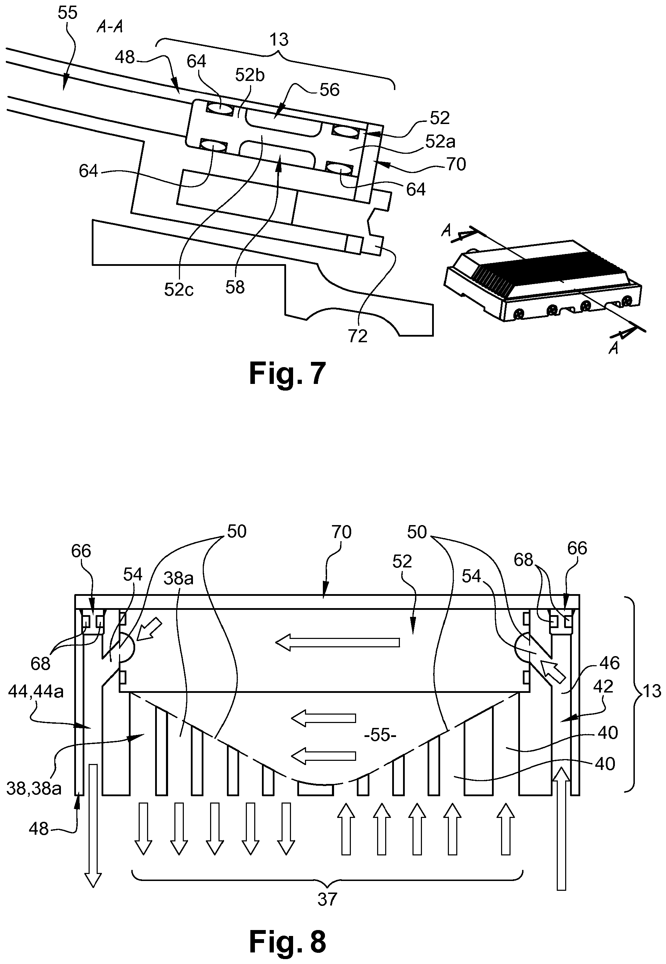

Afin de réaliser, l'échangeur de chaleur, on procède tout d'abord à l'obtention d'une préforme de la partie annulaire 48 de l'échangeur 12a qui est dans un matériau bon conducteur de la chaleur tel qu'un alliage d'aluminium par exemple. Pour cela, on utilise une filière permettant l'obtention simultanément des premiers conduits 38 et seconds conduits 40 du premier circuit 37 et du premier conduit 44 et du second conduit 46 du second circuit 42. A l'issue de cette étape, les premiers conduits 38, 44 et seconds conduits 40, 46 des premier 37 et second 42 circuits s'étendent de la première extrémité 13 à la seconde extrémité de la partie annulaire 48 et débouchent en direction circonférentielle au niveau desdites extrémités. Dans une étape ultérieure, on forme une cavité dans l'épaisseur radiale de la partie annulaire 48, la cavité étant délimitée en pointillés sur la figure 8 et référencée 50. Les secondes portions 38a des premiers conduits 38 et les seconds conduits 40 du premier circuit 37 débouchant dans cette cavité. Egalement, la première portion 44a du premier conduit 44 du second circuit 42 et le second conduit 46 du second circuit 42 débouchant uniquement circonférentiellement au niveau de la face d'extrémité circonférentielle de la partie annulaire 48, on réalise des perçages 54 latéraux permettant de faire communiquer la première portion 44a du premier conduit 44 du second circuit 42 ainsi que le second conduit 46 du second circuit 42 avec la cavité 50 précitée.

Afin de permettre une circulation d'huile indépendante entre le premier circuit 37 et le second circuit 42 au niveau de la première extrémité 13, on ajoute un premier organe d'étanchéité 52 qui est conformé de manière particulière, c'est-à-dire de manière :
- à délimiter avec la partie annulaire 48 au moins un premier canal 55 de liaison fluidique du premier conduit 38 du premier circuit 37 avec le second conduit 40 du premier circuit 37 et avec, et
- à délimiter avec la partie annulaire 48 au moins un second canal 56, 58 de liaison fluidique du premier conduit 44 du second circuit 42 avec le second conduit 46 du second circuit 42, le second canal 56, 58 de liaison étant fluidiquement indépendant du premier canal 55 de liaison.

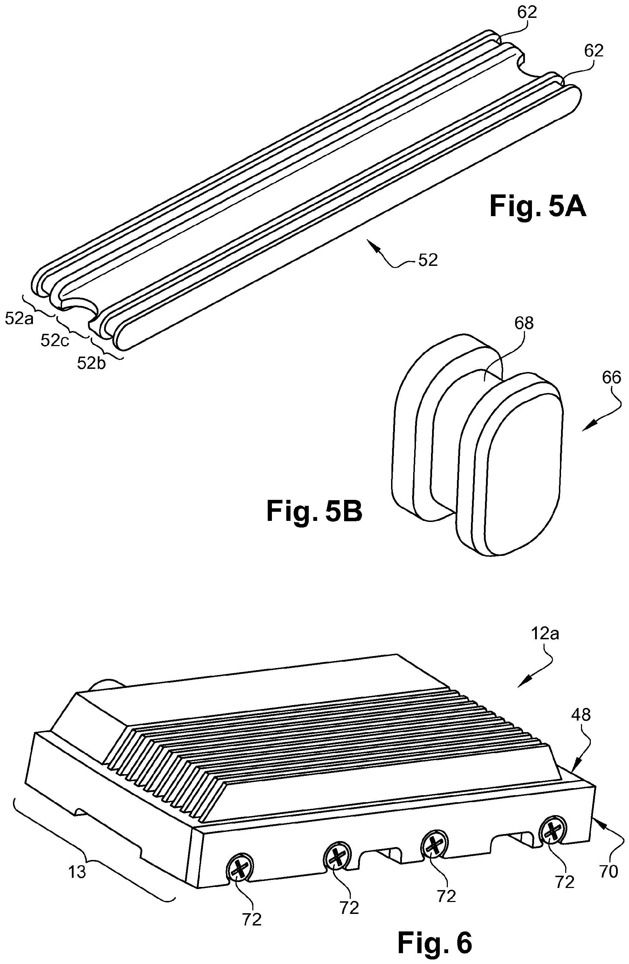

Afin de comprendre comment le premier organe 52 d'étanchéité délimite pour partie le premier canal 55 de liaison et le second canal 56, 58 de liaison, nous allons maintenant le décrire. Plus particulièrement, celui-ci, représenté en figure 5A, présente une forme allongée en direction longitudinal. Selon la direction circonférentielle, il comprend une première partie 52a et une seconde partie 52b sensiblement identique l'une à l'autre et symétrique l'une de l'autre par rapport à plan médian qui est en position dans la turbomachine un plan radial. La première partie 52a et la seconde partie 52b sont reliées l'une à l'autre par une paroi 52c de jonction sensiblement plane et qui s'étend dans une direction perpendiculaire à la direction longitudinale. La première partie 52a et la seconde partie 52b comprennent chacune une gorge annulaire 62 dans laquelle est monté un joint 64 annulaire d'étanchéité (figures 5A et 7).

Le premier organe 52 d'étanchéité est monté à étanchéité dans la cavité 50 de la partie annulaire, avec les joints annulaires 64 montés dans les gorges 62. La face d'extrémité de la première partie 52a du premier organe 52 venant en vis-à-vis et à distance des débouchés des premières portions 38a des premiers conduits 38 et des débouchés des seconds conduits 40 forme une face d'écoulement de l'huile dans le premier canal 55 de liaison. Egalement, le premier organe 52 d'étanchéité est dimensionné et les perçages 54 sont positionnés sur la partie annulaire 48 de manière que le perçage 54 de la seconde portion 44a du premier conduit 44 et le perçage 54 du second conduit 46 débouche dans le second canal 56, 58 de liaison. Plus précisément, on observe que chaque perçage 54 est relié fluidiquement à deux seconds canaux 56, 58 de liaison sensiblement parallèles l'un à l'autre, la paroi 52c de liaison du premier organe 52 d'étanchéité séparant radialement les deux seconds canaux 56, 58 de liaison. On observe également que les joints 64 d'étanchéité assurent l'étanchéité fluidiquement entre le premier circuit 37 et le second circuit 42.

Des seconds organes 66 d'étanchéité sont insérés, au niveau de la première extrémité 13, dans le débouché de la seconde portion 44a du premier conduit 44 du second circuit 42 et dans le débouché du second conduit 46 du second circuit 42. Chacun des seconds organes 66 comprend une gorge 68 annulaire dans laquelle est monté un joint d'étanchéité 68 de manière similaire à ce qui a été décrit en référence au premier organe 52, la fonction étant identique.

Afin de maintenir le premier organe 52 d'étanchéité et les seconds organes 66 d'étanchéité en position malgré la pression d'huile, une plaque 70 est appliquée sur lesdits organes au niveau de la face d'extrémité circonférentielle. Cette plaque est vissée par des vis 72 dans la partie annulaire.

## Revendications

1. Echangeur thermique (12a) annulaire d'axe longitudinal (14) pour turbomachine, destiné par exemple à être supporté par une virole
annulaire (16) d'un carter de la turbomachine, comprenant une partie annulaire (48) monobloc comprenant un premier circuit (37) fluidique comportant au moins un premier conduit (38) et au moins un second conduit (40) s'étendant annulairement et un second circuit fluidique (42) comportant au moins un premier conduit (44) et au moins un second conduit (46) s'étendant annulairement et agencés dans une direction perpendiculaire à la direction longitudinale (14) de part et d'autre des premier conduit (38) et second conduit (40) du premier circuit (37), **caractérisé en ce que** les premier (38) et second (40) conduits du premier circuit (37) ainsi que les premier (44) et second (46) conduits du second circuit (42) débouchent à une première extrémité (13) de ladite partie annulaire (48) dans une cavité (50) débouchant elle-même en direction circonférentielle et dans laquelle est inséré un premier organe (52) d'étanchéité conformé de manière à :
- délimiter avec la partie annulaire (48) au moins un premier canal (55) de liaison fluidique du premier conduit (38) du premier circuit (37) avec le second conduit (40) du premier circuit (37), et
- délimiter avec la partie annulaire (48) au moins un second canal (56, 58) de liaison fluidique du premier conduit (44) du second circuit (42) avec le second conduit (46) du second circuit (42), le second canal (56, 58) de liaison étant fluidiquement indépendant du premier canal (55) de liaison.

2. Echangeur thermique selon la revendication 1, dans lequel le premier organe (52) d'étanchéité comprend des gorges (62) externes dans lesquelles sont engagés des joints (64) d'étanchéité.

3. Echangeur thermique selon la revendication 1 ou 2, dans lequel le premier organe (52) d'étanchéité comprend une paroi (52c) s'étendant dans ladite direction perpendiculaire à la direction longitudinale et délimitant avec la partie annulaire (48) deux seconds canaux (56, 58) de liaisons sensiblement parallèles.

4. Echangeur selon la revendication 3, dans lequel l'un des deux seconds canaux (56, 58) est agencé radialement à l'extérieur de l'autre des deux seconds canaux et les deux seconds canaux sont séparés fluidiquement l'un de l'autre par la
paroi (52c) du premier organe (52) d'étanchéité.

5. Echangeur selon l'une des revendications précédentes, dans lequel le premier organe (52) est bloqué en position dans la cavité (50) par une plaque (70) appliquée au niveau de l'extrémité circonférentielle de ladite partie annulaire (48).

6. Echangeur selon l'une des revendications précédentes, dans lequel les premier et second conduits du second circuit (42) sont obturés par des seconds organes (66) à leurs extrémités débouchant circonférentiellement au niveau de la première extrémité de la partie annulaire (48).

## Patentansprüche

1. Ringförmiger Wärmetauscher (12a) mit Längsachse (14) für Turbomaschinen, der beispielsweise dazu bestimmt ist, von einem Mantelring (16) eines Gehäuses der Turbomaschine getragen zu werden, enthaltend einen einstückigen Ringabschnitt (48) mit einem ersten Strömungskreislauf (37), der zumindest eine erste Leitung (38) und zumindest eine zweite Leitung (40) enthält, die ringförmig verlaufen, sowie mit einem zweiten Strömungskreislauf (42), der zumindest eine erste Leitung (44) und zumindest eine zweite Leitung (46) enthält, die ringförmig verlaufen und in einer Richtung senkrecht zur Längsrichtung (14) beiderseits der ersten Leitung (38) und der zweiten Leitung (40) des ersten Kreislaufs (37) angeordnet sind,
**dadurch gekennzeichnet, dass** die erste (38) und die zweite Leitung (40) des ersten Kreislaufs (37) sowie die erste (44) und die zweite Leitung (46) des zweiten Kreislaufs (42) an einem ersten Ende (13) des Ringabschnitts (48) in einen Hohlraum (50) ausmünden, der seinerseits in Umfangsrichtung ausmündet und in welchen ein erstes Dichtungsorgan (52) eingesetzt ist, das dazu ausgelegt ist,
- mit dem Ringabschnitt (48) zumindest einen ersten Strömungsverbindungskanal (55) zur Verbindung der ersten Leitung (38) des ersten Kreislaufs (37) mit der zweiten Leitung (40) des ersten Kreislaufs (37) zu begrenzen, und
- mit dem Ringabschnitt (48) zumindest einen zweiten Strömungsverbindungskanal (56, 58) zur Verbindung der ersten Leitung (44) des zweiten Kreislaufs (42) mit der zweiten Leitung (46) des zweiten Kreislaufs (42) zu begrenzen, wobei der zweite Verbindungskanal (56, 58) strömungsmäßig unabhängig von dem ersten Verbindungskanal (55) ist.

2. Wärmetauscher nach Anspruch 1,
wobei das erste Dichtungsorgan (52) äußere Nuten (62) aufweist, in welche Dichtungen (64) eingreifen.

3. Wärmetauscher nach Anspruch 1 oder 2,
wobei das erste Dichtungsorgan (52) eine Wandung (52c) aufweist, die sich in der Richtung senkrecht zur Längsrichtung erstreckt und mit dem Ringabschnitt (48) zwei zweite Verbindungskanäle (56, 58) begrenzt, die im Wesentlichen parallel verlaufen.

4. Wärmetauscher nach Anspruch 3,
wobei einer der beiden zweiten Kanäle (56, 58) radial außerhalb des anderen der beiden zweiten Kanäle angeordnet ist und die beiden zweiten Kanäle durch die Wandung (52c) des ersten Dichtungsorgans (52) strömungsmäßig voneinander getrennt sind.

5. Wärmetauscher nach einem der vorhergehenden Ansprüche,
wobei das erste Organ (52) mittels einer Platte (70), die im Bereich des Umfangsendes des Ringabschnitts (48) anliegt, in Stellung in dem Hohlraum (50) gesichert ist.

6. Wärmetauscher nach einem der vorhergehenden Ansprüche,
wobei die erste und die zweite Leitung des zweiten Kreislaufs (42) mit zweiten Organen (66) an ihren Enden verschlossen sind, die in Umfangsrichtung im Bereich des ersten Endes des Ringabschnitts (48) ausmünden.

## Claims

1. Annular heat exchanger (12a) with a longitudinal axis (14) for a turbomachine, intended for example to be supported by an annular shell (16) of a casing of the turbomachine, comprising a one-piece annular part (48) comprising a first fluidic circuit (37) comprising at least one first conduit (38) and at least one second conduit (40) extending annularly and a second fluidic circuit (42) comprising at least one first conduit (44) and at least one second conduit (46) extending annularly and arranged in a direction perpendicular to the longitudinal direction (14) on either side of the first conduit (38) and second conduit (40) of the first circuit (37), **characterised in that** the first (38) and second (40) conduits of the first circuit (37) and the first (44) and second (46) conduits of the second circuit (42) open at a first end (13) of said annular part (48) into a cavity (50) which itself opens in the circumferential direction and into which is inserted a first sealing member (52) which is shaped so as to:
- delimit with the annular part (48) at least a first channel (55) for fluidic connection of the first conduit (38) of the first circuit (37) with the second conduit (40) of the first circuit (37), and
- delimit with the annular part (48) at least one second channel (56, 58) for fluidic connection of the first conduit (44) of the second circuit (42) with the second conduit (46) of the second circuit (42), the second connecting channel (56, 58) being fluidically independent of the first connecting channel (55).

2. Heat exchanger according to claim 1, in which the first sealing member (52) comprises external grooves (62) in which sealing gaskets (64) are engaged.

3. Heat exchanger according to claim 1 or 2, in which the first sealing member (52) comprises a wall (52c) extending in the said direction perpendicular to the longitudinal direction and delimiting with the annular part (48) two substantially parallel second connecting channels (56, 58).

4. An exchanger according to claim 3, wherein one of the two second channels (56, 58) is arranged radially outside the other of the two second channels and the two second channels are fluidly separated from each other by the wall (52c) of the first sealing member (52).

5. An exchanger according to one of the preceding claims, in which the first member (52) is locked in position in the cavity (50) by a plate (70) applied at the circumferential end of said annular portion (48).

6. An exchanger according to one of the preceding claims, in which the first and second ducts of the second circuit (42) are closed off by second members (66) at their ends opening circumferentially at the first end of the annular part (48).
